Europäisches Patentamt

(19) European Patent Office

Office européen des brevets

(11) Publication number: **0 070 865**
**B1**

(12) **EUROPEAN PATENT SPECIFICATION**

(45) Date of publication of patent specification: 03.06.87

(21) Application number: 82900503.2

(22) Date of filing: 10.02.82

(86) International application number:
PCT/DK82/00014

(87) International publication number:
WO 82/02751 19.08.82 Gazette 82/20

(51) Int. Cl.⁴: **F 16 B 5/00**

(54) METHOD AND TOOL FOR AN AIRTIGHT SEALING OF TWO FOILS.

(30) Priority: 11.02.81 NO 810472

(43) Date of publication of application:
09.02.83 Bulletin 83/06

(45) Publication of the grant of the patent:
03.06.87 Bulletin 87/23

(84) Designated Contracting States:
AT BE CH DE FR GB LI LU NL SE

(56) References cited:
DE-A-2 143 762
DE-A-2 547 599
FR-A-1 591 625
FR-A-2 208 770
GB-A- 903 637
SE-B-77 040 137
US-A-3 149 943
US-A-3 505 725
US-A-3 546 764

(73) Proprietor: HINDSGAUL, Kim
Otto Rogesvei 35 A
N-1372 Osteras (NO)
(73) Proprietor: OLAFSEN, Walther
Kirkeveien 19
N-Oslo 2 (NO)

(72) Inventor: HINDSGAUL, Kim
Otto Rogesvei 35 A
N-1372 Osteras (NO)
Inventor: OLAFSEN, Walther
Kirkeveien 19
N-Oslo 2 (NO)

(74) Representative: Sasse, Volker, Dipl.-Ing.
Parreutstrasse 27
D-8070 Ingolstadt (DE)

Courier Press, Leamington Spa, England.

## Description

The invention relates to a method for realising an airtight sealing of two foils and to a tool for practising this method.

When sealing bags of e.g. plastic foil it is difficult, when handling large sizes, to obtain a sealing by simple means, which can be re-opened and then sealed again if desired without any damage to the foil. As such bags furthermore are rather expensive, there is a considerable economic risk connected to the use of the hitherto known sealing methods.

These methods may most often consist of rolling the edge of the foils and keeping the material by means of tape or the like.

A method for realising an airtight sealing of two foils in accordance with the prior art portion of claim 1 is known from the GB—A—903 637, presenting a frame having a channel with an external U-shaped profil. Into this channel the edge of a flexible sheet is pressed together with a separate hose and then the hose is blow up to fix the sheet. But it is very difficult to get and to hold the hose into the groove of the frame, when it isn't blow up. When the hose is too strong, it is impossible to get him with the finger into the U-shaped profile.

The DE—A—25 47 599 shows a similar exposition. The slashed tube, in which comes the foils, and the shim have the same form. Only the shim is to press in the channel, when in the inner of the shim is a vacuum. But it is very difficult and expensive to get this state.

A sealing device and a method for joining the ends of a flexible plastic film is known in the US—A—3 546 764. The sealing device press the strip in a channel and for this the strip must have the corpulence like the inner of the channel. When the strip is sitting in the channel, there is no possibility to press the enclosure against the inner wall of the channel The device cannot help to realize an airtight connection of two foils, because the enclosure will be pressed only in the channel and there in the inner of channel is too much room. There is a danger, that the foils draws out and leakage grows.

When large foil bags which e.g. shall be used for storage of crops or the like are to be sealed, the sealing must take place all the way round the bag, and secure an airtight connection of the underlaying foil and the top foil. This must take place in a simple way without damage to the foils, and besides, the sealing must be able to be re-opened if desired and sealed again, which is not possible by means of the hitherto known methods. Furthermore, the sealing must be completely airtight.

It is the object of the invention to meet these shortcomings and to improve the sealing method, and this is obtained by means of a method according to the invention as claimed in claim 1, where the two foils are forced into the hollow slide by means of a roll placed inside the hollow slide and moved in the longitudinal direction of the slide, and where the flexible tube is introduced by means of a wheel with a mainly convex outer sectional form that permits the wheel to run on the edges of the groove, the main portion of the wheel being outside the hollow slide and the wheel running together with the roll. In this way a sure take place in the hollow slide and an airtight sealing of two or more foils can be obtained by simple means, which sealing can be released without damage to the foil, as the inflated tube will press the foils with an even and constant pressure against the inner walls of the slide. The method is also very quick, and can be easily practised anywhere, as there is no special need for an air pressure source, because e.g. a hand-operated pump can easily supply the desired pressure to the tube.

When using the tool as specified in claim 2 the parts can be led down into the slide by just rolling the tool across the slide so that the materials are put in the right place in this.

Finally it is appropriate as mentioned in claim 3, to provide the tool with a backstop roll, as the placing of the foils and the tube can be effected without the slide having to rest on a firm foundation.

The invention will be further described in the following with reference to the drawing, where

Fig. 1 shows a sectional view of the parts before the sealing,

Fig. 2 shows a sectional view of the parts after the sealing,

Fig. 3 shows a sectional view of the parts, when being put into place, and

Fig. 4 shows a sectional view of the parts, seen in the direction IV—IV in Fig. 3.

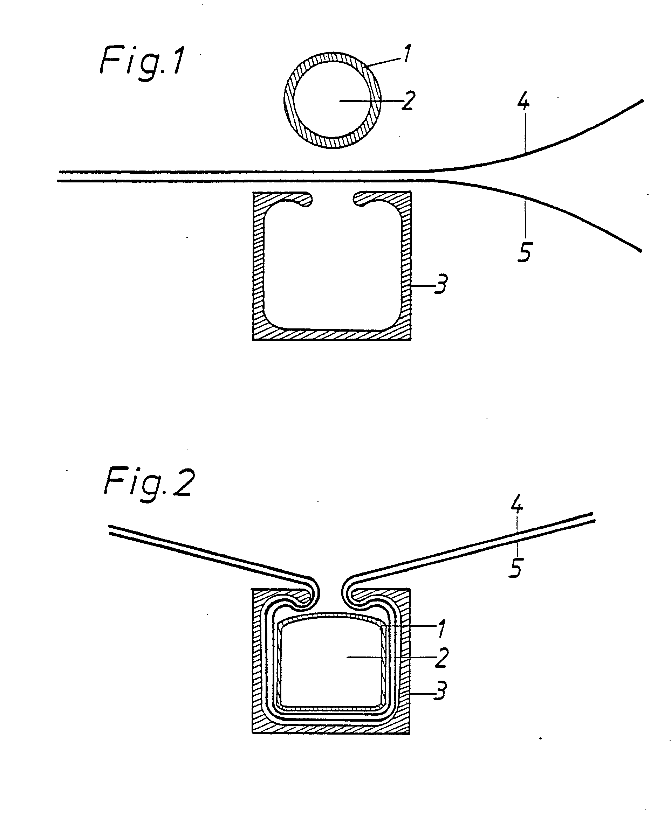

The method will be described with reference to the parts, shown in Figs. 1 and 2, i.e. the foils 4 and 5 which can be a sealing area of a foil sack or an underlaying foil 5 and a top foil 4 in a silo.

Along the complete sealing area a slide 3 mainly of metal as e.g. aluminum is provided, which in the shown example is in the shape of a hollow slide with a longitudinal opening or groove at the top.

The foils are first put down into the slide, and then a flexible airtight tube 1 is pressed down into the slide at the top of the foils. The tube is airtight, as already mentioned, and further provided with a supply for pressure air. Then a pressure is put to the cavity 2 of the tube, which thereby expands and presses the foils 4, 5 out against the interior of the tube for the formation of a completely airtight connection between the foils, as shown in Fig. 2.

When removing the pressure from the tube, this can easily be drawn out of the slide together with the foils, after which the method can be repeated. Thus no damage overtakes the parts, and thus the sealing can take place at any desired place on the foil, so that e.g. the volume of a bag may be varied according to the need.

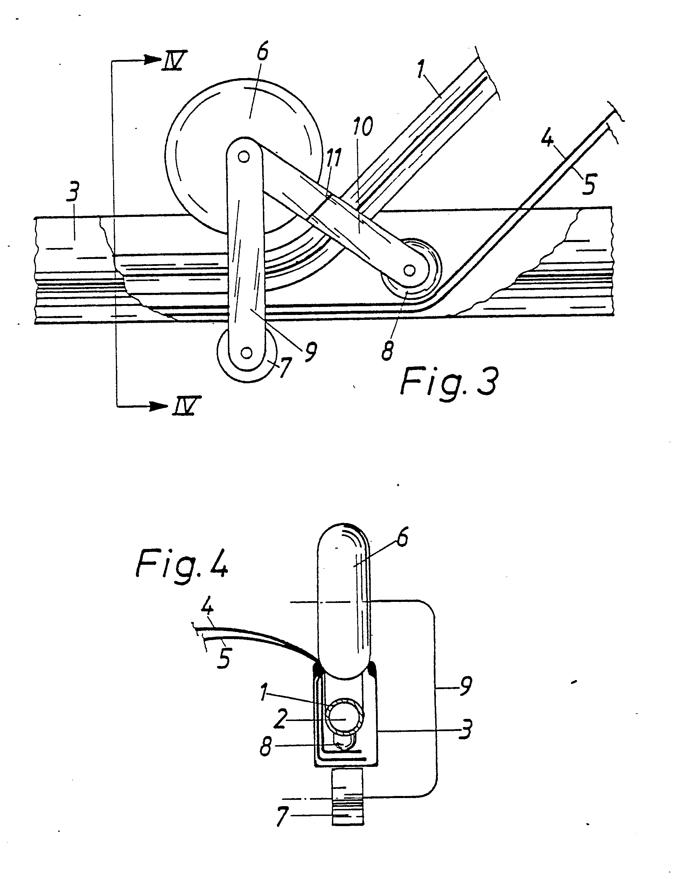

For the placing of the parts the tool shown in Figs. 3 and 4 can be used. It consists of a handle or a frame 9, to the upper part of which a wheel 6 is mounted, which is rounded along the outside so that it can run in the groove at the top of the slide 3. In front of this wheel 6 a smaller roll 8 is mounted which can run inside the slide and press down the foils, as shown in Fig. 3.

To the handle 9 a further roll 7 is mounted which can abut on the underside of the slide, and thus form a counterpressure against the other wheels 6 and 8.

When this tool is led across the parts the wheel 6 presses the tube 1 down into the slide 3, while the first smaller roller 8 presses the foils 4 and 5 down in front of the tube 1. Thus the correct placing of the parts in the slide is secured so that the parts will not be damaged when pressure is put to the cavity of the tube.

In order to make the handling of the tool easier, the handle 9 can be provided with a not-shown prolongation, so that you can drive the tool across the slide in upright position, when the slide is on a foundation on a level with the ground.

### Claims

1. Method for realising an airtight sealing of two foils (4, 5) whereby the two foils (4, 5) are forced into a hollow slide (3) through a longitudinal groove in the slide, whereby a flexible tube (1) is introduced simultaneously with the foils (4, 5), into the hollow slide (3) and whereby, after this introduction of the two foils (4, 5) and the flexible tube (1) into the hollow slide (3), the flexible tube (1) is inflated in order to press the foils (4, 5) against the inner walls of the hollow slide (3), characterised in that

— said foils (4, 5) are forced into the hollow slide (3) by means of a roll (8) placed inside the hollow slide (3) and moved in the longitudinal direction of the slide (3); and in that

— said flexible tube (1) is introduced by means of a wheel (6) with a mainly convex outer sectional form that permits the wheel to run on the edges of the groove, the main portion of the wheel (6) being outside the hollow slide (3) and the wheel (6) running together with the roll (8).

2. Tool for practising the method according to claim 1, characterised in that it comprises a wheel (6) with a mainly convex outer sectional form that permits the wheel to run in the groove of the slide (3), and a further roll (8) that can run inside the slide against its end wall.

3. Tool according to claim 2, characterised in that a backstop roll (7) is mounted which runs against the outer end wall of the slide (3).

### Patentansprüche

1. Verfahren zum luftdichten Verbinden zweier Folien (4, 5), bei dem die zwei Folien (4, 5) in eine hohle Gleitschiene (3) durch eine Längsrille in der Gleitschiene gedrückt werden, eine elastische Hülse (1) gleichzeitig mit den Folien (4, 5) in die hohle Gleitschiene (3) eingeführt wird und bei dem nach dem Einlegen der zwei Folien (4, 5) und der elastischen Hülse (1) in die hohle Gleitschiene (3) die elastische Hülse (1) aufgeblasen wird, um die Folien (4, 5) gegen die Innenwände der hohlen Gleitschiene (3) zu drücken, dadurch gekennzeichnet, daß die Folien (4, 5) in die hohle Gleitschiene (3) von einer Rolle (8) gedrückt werden, welche innerhalb der hohlen Gleitschiene (3) angeordnet ist und sich in Längsrichtung der hohlen Gleitschiene (3) bewegt und daß die elastische Hülse (1) durch ein Rad (6) mit einem hauptsächlich ballig nach außen geformten Profil eingeführt wird, das dem Rad gestattet, auf den Rillenkanten zu laufen, der Hauptteil des Rades (6) außerhalb der hohlen Gleitschiene (3) verbliebt und das Rad (6) gleichzeitig mit der Rolle (8) sich bewegt.

2. Werkzeug zur Durchführung des Verfahrens nach Anspruch 1, dadurch gekennzeichnet, daß es Rad (6) aufweist, mit einem hauptsächlich ballig nach außen geformten Profil, welches dem Rad gestattet, in der Rille der Gleitschiene (3) zu laufen, und eine weitere Rolle (8), die innerhalb der Gleitschiene gegen deren Endwand läuft.

3. Werkzeug nach Anspruch 2, dadurch gekennzeichnet, daß eine Gegenhalterolle (7) vorgesehen ist, die gegen die äußere Endwand der Gleitschiene (3) läuft.

### Revendications

1. Procédé pour réaliser une jonction étanche à l'air de deux feuilles (4, 5), dans lequel les deux feuilles (4, 5) sont introduites de force dans un guide creux (3) par une gorge longitudinale dans le guide, un tube souple (1) est introduit en même temps que les feuilles (4, 5) dans le guide creux (3) et, après l'introduction des deux feuilles (4, 5) et du tube souple (1) dans le guide creux (3), le tube souple (1) est gonflé afin de comprimer les feuilles (4, 5) contre les parois intérieures du guide creux (3), caractérisé en ce que:

— les feuilles (4, 5) sont introduites de force dans le guide creux (3) au moyen d'un rouleau (8) placé à l'intérieur du guide creux (3) et déplacées dans le sens longitudinal du guide (3); et en ce que

— le tube souple (1) est introduit par une roue (6) dont le profil extérieur est, en coupe, principalement convexe, ce qui permet à la roue de rouler sur les bords de la gorge, la portion principale de la roue (6) se trouvant à l'extérieur du guide creux (3) et la roue (6) tournant avec le rouleau (8).

2. Outil pour mettre en oeuvre le procédé selon la revendication 1, caractérisé en ce qu'il comporte une roue (6) avec un profil extérieur, en coupe, principalement convexe, ce qui permet à la roue de rouler dans la gorge du guide (3), et un autre rouleau (8) qui peut rouler à l'intérieur du guide contre sa paroi terminale.

3. Outil selon la revendication 2, caractérisé en ce qu'un rouleau de contre-butée (7) est monté pour rouler contre la paroi terminale extérieure du guide (3).

*Fig.1*

1

2

4

5

3

*Fig.2*

4

5

1

2

3

Fig. 3

Fig. 4